# FASCICULE DE BREVET EUROPEEN

(11) **EP 1 612 068 B1**
(45) Date de publication et mention de la délivrance du brevet: **14.05.2008**
(21) Numéro de dépôt: 05300504.7
(22) Date de dépôt: 22.06.2005
(51) Int. Cl.: B60G 21/05, B60G 7/00

(54) **Train de véhicule automobile à élasticité longitudinale limitée par un organe de butée**
Motorfahrzeugachse mit durch einen Anschlag begrenzter Längs-Elastizität
Vehicle axle with longitudinal elasticity limited by a stop device

(30) Priorité: 02.07.2004 FR 0407374
(43) Date de publication de la demande: 04.01.2006
(73) Titulaire: Peugeot Citroen Automobiles SA, 78140 Vélizy-Villacoublay (FR)
(72) Inventeur: Toupet, Sébastien, 92400 Courbevoie (FR)
(74) Mandataire: Fernandez, Francis Lionel

(56) Documents cités:
- EP-A- 1 361 084
- FR-A- 1 096 872
- FR-A- 2 861 333
- US-A- 1 890 766
- US-A1- 2003 038 441

## Description

L'invention concerne un train arrière de véhicule automobile comprenant un support de roue, ce train arrière incluant une liaison flexible autorisant un mouvement de rotation du support de roue autour d'un axe de rotation distinct de l'axe de roue, cette liaison flexible comprenant au moins deux plaques flexibles sensiblement planes contenues dans deux plans distincts dont l'intersection coïncide avec l'axe de rotation.

Dans un train de véhicule automobile, la roue est principalement libre de se déplacer verticalement pour amortir les irrégularités du sol. La possibilité de rotation du support de roue autour d'un axe distinct de celui de la roue est un degré de liberté supplémentaire, prévu pour améliorer le comportement routier et le confort du véhicule.

Ce degré de liberté supplémentaire permet au support de roue de se déplacer avec la roue lorsque des efforts sont appliqués à cette roue, et de revenir à une position de référence lorsqu'aucun effort n'est appliqué à la roue.

Pour assurer la liaison entre le support de roue et le bras oscillant du train, il est notamment connu du document EP1 361 084 d'employer deux plaques flexibles pour définir un axe de rotation T distinct de l'axe de la roue, et du document FR 1 096 872 d'employer deux biellettes articulées à leurs extrémités respectives sur le bras et le support, les deux biellettes convergeant vers un point par lequel passe un axe de rotation autour duquel le support de roue peut osciller.

Dans un train arrière multibras qui est connu de la demande de brevet EP1288028, la roue comprend un tel degré de liberté supplémentaire. Quatre bras relient le support de roue au véhicule en formant sensiblement deux parallélogrammes déformables. Les deux bras situés en position basse sont des lames dimensionnées pour avoir une certaine flexibilité de manière à offrir le degré de liberté supplémentaire. Ces lames sont sensiblement parallèles l'une à l'autre tout en étant inscrites dans deux plans formant un angle l'un par rapport à l'autre.

Lorsque les efforts appliqués à la roue sollicitent ces lames en flexion, leur déformation donne lieu à un mouvement de rotation du support de roue autour d'un axe qui est l'intersection des deux plans distincts dans lesquels sont inscrites les deux lames.

L'invention concerne l'adjonction d'un tel degré de liberté supplémentaire aux trains semi-déformables qui offrent des performances intéressantes par rapport aux trains multibras, tout en ayant un encombrement beaucoup plus faible, de sorte qu'ils sont de plus en plus répandus.

Le but de l'invention est de proposer une conception de train arrière semi-déformable présentant ce degré de liberté supplémentaire, tout en étant d'une conception simple permettant sa production à faible coût.

A cet effet, l'invention a pour objet un train arrière de véhicule automobile conforme à la revendication 1.

Selon une caractéristique de l'invention, les deux plaques flexibles sont disposées l'une par rapport à l'autre dans des plans distincts sensiblement verticaux et formant un angle entre eux, ces deux plans ayant pour intersection un axe orienté transversalement et situé au sol ou sous le sol.

Selon une autre caractéristique de l'invention, au moins un organe de butée comprend une plaque de butée sensiblement horizontale ayant un premier bord rigidement fixé au bras oscillant, et un second bord disposé en regard d'une plaque flexible en étant espacé de cette plaque flexible lorsqu'elle est dans un état non fléchi.

Selon une autre caractéristique de l'invention, au moins un organe de butée comprend une plaque de butée incluant une surface sensiblement horizontale, comprenant un premier bord rigidement fixé au support de roue, et un second bord situé en regard d'une plaque flexible en étant espacé de cette plaque flexible lorsqu'elle est dans un état non fléchi.

Selon une autre caractéristique de l'invention, le train comprend au moins une plaque fixe et un arrêtoir, cette plaque fixe longe une plaque flexible correspondante en étant espacée de celle-ci lorsque cette plaque flexible est dans un état non fléchi, cette plaque fixe ayant un premier bord fixe rigidement fixé au bras oscillant et un second bord libre situé à proximité du support de roue. L'arrêtoir est rigidement fixé au support de roue et présente une surface située en regard de la plaque fixe dans une région proche du second bord libre de cette plaque fixe, cet arrêtoir étant espacé de la plaque fixe lorsque les plaques flexibles sont dans un état non fléchi.

Selon une autre caractéristique de l'invention, le train comprend deux plaques fixes réunies par un renfort de manière à constituer un ensemble rigidement solidaire du bras oscillant, ces deux plaques fixes étant situées entre les deux plaques flexibles le long du bras oscillant, chaque plaque fixe longeant une plaque flexible correspondante, le train comprenant deux arrêtoirs, chaque arrêtoir étant situé en regard de l'une des plaques fixes correspondante en étant espacé de celle-ci lorsque les plaques fixes sont dans un état non fléchi.

Selon une autre caractéristique de l'invention, une entretoise en matériau élastique est interposée entre une plaque de butée ou un arrêtoir et la plaque flexible correspondante.

L'invention sera maintenant décrite plus en détail, et en référence aux dessins annexés qui en illustrent une forme de réalisation à titre d'exemple non limitatif.

Dans les dessins, les éléments correspondants sont désignés par les mêmes numéros de référence, même s'il s'agit de modes de réalisation différents.
- La figure 1 est une vue d'ensemble d'un train arrière semi-déformable ;
- La figure 2 est une vue d'ensemble d'une liaison flexible équipant un train arrière semi-déformable ;
- La figure 3 est une vue d'ensemble d'un premier mode de réalisation d'une liaison flexible comprenant un organe de butée ;
- La figure 4 est une première vue d'ensemble d'un second mode de réalisation d'une liaison flexible comprenant un organe de butée ;
- La figure 5 est une seconde vue d'ensemble du second mode de réalisation de la figure 4.

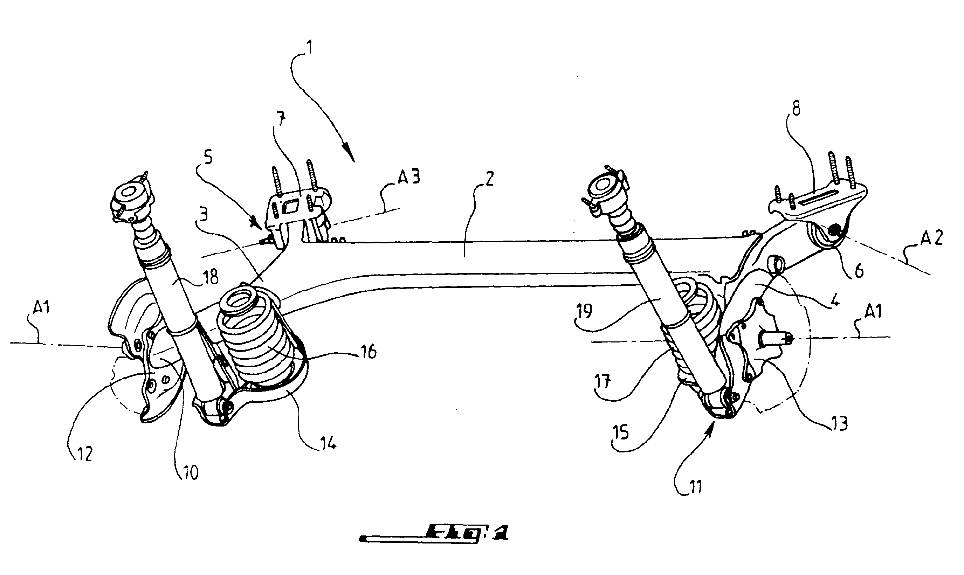

Figure 1, un train arrière semi-déformable 1 comprend deux bras oscillants 3 et 4 reliés par une traverse 2, cette traverse ayant chacune de ses extrémités rigidement solidarisée à mi-longueur de l'un des bras oscillants.

Ces deux bras oscillants 3 et 4 ont chacun une extrémité avant 5, 6 fixée à une partie fixe du véhicule par des fixations 7, 8, tout en étant libres de tourner par rapport à ces fixations. Ces deux bras oscillants ont également chacun une extrémité arrière 10, 11, qui porte un support de roue 12, 13 destiné à recevoir une roue apte à tourner autour d'un axe A1 pour permettre le roulage du véhicule.

Comme visible sur cette figure, une assise 14, 15 est solidarisée à chaque bras oscillant, chaque assise supportant une extrémité d'un ressort, respectivement 16 et 17, et une extrémité d'un amortisseur de mouvement, respectivement 18 et 19. Les autres extrémités de chaque ressort et amortisseur sont solidarisées à une partie fixe du véhicule.

Chaque roue est ainsi maintenue plaquée sur le sol par le bras oscillant qui la porte, et qui pivote autour d'un axe A2, A3 pour assurer un débattement vertical de cette roue.

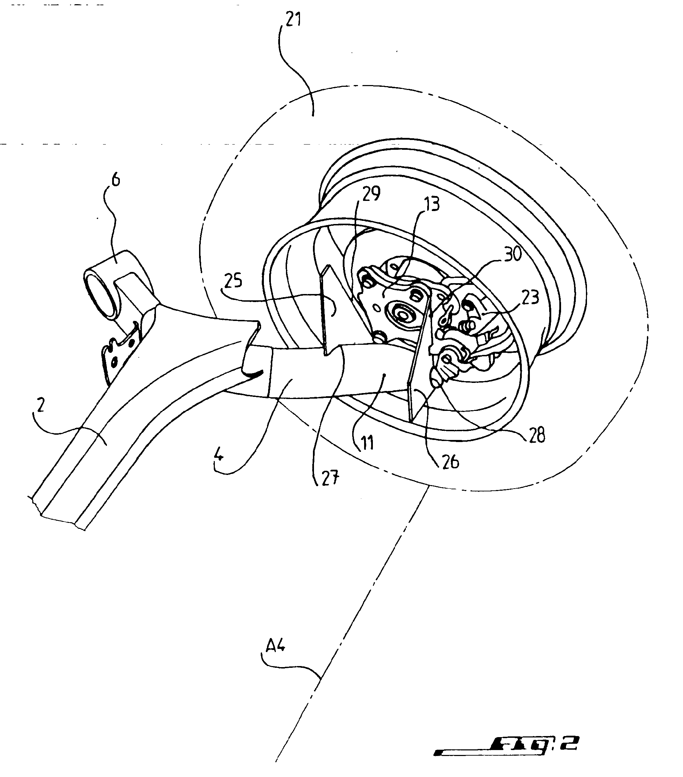

Figure 2, une roue 21 est montée rotative sur le support de roue 13 qui est ici représenté schématiquement par une plaque de fixation, cette plaque étant ici située dans le voisinage d'un étrier de frein 23.

Le support de roue 13 est fixé au bras oscillant 4 par une liaison flexible. Cette liaison flexible permet au support de roue 13 de tourner autour d'un axe de rotation A4 distinct de l'axe de la roue A1. La liaison flexible est ici formée par deux plaques flexibles 25 et 26 qui sont contenues dans deux plans distincts dont l'intersection coïncide avec cet axe de rotation.

Chaque plaque flexible 25, 26 a un premier bord 27, 28 rigidement fixé au bras oscillant 4 et un second bord 29, 30 qui est rigidement fixé au support de roue 13. Cette liaison flexible peut être dimensionnée spécifiquement pour obtenir une élasticité souhaitée de la liaison flexible, sans altérer les autres caractéristiques du train arrière.

Ces plaques flexibles 25, 26 sont inscrites dans deux plans distincts formant un certain angle l'un par rapport à l'autre de manière à définir un V ouvert vers le haut. L'orientation de ces plaques flexibles 25, 26 définit la position de l'axe A4, qui est l'intersection des plans dans lesquels sont contenues ces plaques flexibles.

Dans la représentation symbolique de la figure 2, les bords 28 et 30 se suivent le long d'un même côté de la plaque flexible 26, mais dans les autres exemples de liaison détaillés plus bas, ces deux bords s'étendent sur des côtés opposés de la plaque flexible 26, ce qui donne lieu à une meilleure flexion de la plaque 26 lorsqu'elle est sollicitée mécaniquement.

Il faut noter que la liaison flexible peut également être constituée de plus de deux plaques flexibles reliant le bras oscillant au support de roue et situées dans des plans distincts qui se coupent deux à deux en un même axe A4 unique.

L'axe de rotation A4 du support de roue est situé sensiblement sous le sol, voire à hauteur du point de contact de la roue 21 avec le sol, en étant orienté transversalement, c'est-à-dire parallèlement à l'axe de rotation de la roue. La liaison permet ainsi un recul de la roue selon un mouvement sensiblement pendulaire, autour de l'axe A4, ce mouvement étant inscrit dans un plan vertical longitudinal par rapport au véhicule.

Le degré de liberté supplémentaire est donc ici une élasticité longitudinale permettant à la roue 21 de reculer le long du véhicule. Cette possibilité de recul facilite le passage d'obstacles de dits "francs" ou à "front raide", c'est-à-dire présentant un bord vertical ou sensiblement vertical avec lequel la roue entre en contact en premier. Lorsqu'un tel obstacle entre en contact avec la roue 21, il génère un effort de percussion sur cette roue, mais cet effort de percussion est atténué par le recul de la roue, ce qui améliore le confort du véhicule. Lorsque cet effort s'annule, la roue revient vers une position de référence, du fait de la flexibilité de la liaison.

On notera que compte tenu de la position de l'axe A4 en base de roue, la liaison flexible a une raideur élevée en base de roue pour ne pas perturber le comportement routier du véhicule, notamment au freinage, et qu'elle a une raideur plus faible lorsqu'un effort est appliqué à hauteur du centre roue pour procurer l'élasticité longitudinale nécessaire au franchissement d'obstacles.

Selon l'invention, le train arrière est muni d'au moins un organe de butée qui agit sur la liaison flexible pour limiter le mouvement du support 13 par rapport au bras oscillant 4, afin de garantir la tenue mécanique de la liaison élastique lors du passage d'obstacles sévères du type pavé, saignée, etc.

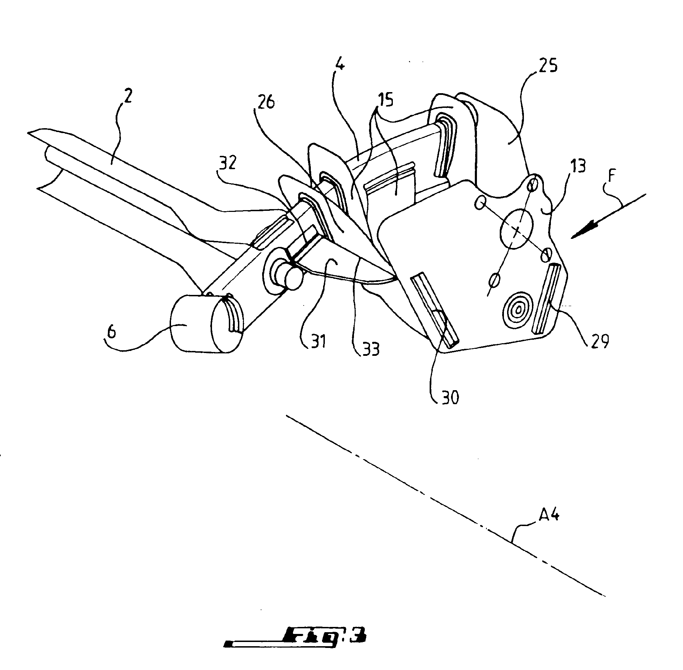

Dans un premier mode de réalisation de l'invention qui est représenté sur la figure 3, un train arrière selon l'invention est équipé d'un organe de butée 31 qui limite le mouvement du support de roue 13. Dans l'exemple de la figure 3, l'organe de butée 31 est formé par une plaque sensiblement rectangulaire disposée dans un plan sensiblement horizontal par rapport à la plaque flexible 26.

Cette plaque 31 a un premier bord 32 rigidement fixé au bras oscillant 4, et un second bord 33 adjacent et perpendiculaire au premier, qui est disposé en vis-à-vis de la plaque flexible 26 tout en étant légèrement espacé de celle-ci lorsque la liaison flexible est au repos, c'est-à-dire lorsque la plaque flexible 26 est dans un état non fléchi.

Lorsqu'un effort important, tel que l'effort repéré par F sur la figure 3, est appliqué à la liaison flexible, la plaque flexible 26 fléchit jusqu'à venir en appui contre le bord 33 de la plaque 31, ce qui limite l'amplitude de flexion de cette plaque flexible 26 pour limiter par là même l'amplitude du mouvement du support 13 par rapport au bras oscillant 4.

Ainsi, lorsqu'un effort important est appliqué à la liaison flexible, la déformation de la plaque flexible 26 est limitée à l'écartement qui la sépare du bord 33, ce qui correspond à un domaine de déformation élastique de la plaque flexible. Après application de cet effort important, la liaison flexible revient dans sa position de référence.

Cet organe de butée permet d'améliorer significativement la tenue mécanique de la liaison flexible. Il permet d'éviter une déformation trop importante de la plaque flexible qui pourrait conduire à une déformation permanente de celle-ci. Dans des cas plus critiques, il permet d'éviter une détérioration plus importante de la plaque flexible telle que son arrachement.

Lorsqu'un effort moins important est appliqué à la liaison flexible, la plaque flexible 26 se déforme sans atteindre le bord 33 de l'organe de butée 31, puis revient dans sa position de référence lorsque l'effort s'annule.

Dans l'exemple de la figure 3, la plaque de butée 31 est fixée au bras oscillant 4 pour limiter le mouvement de la plaque flexible 26. Mais cette plaque de butée peut également être fixée au support de roue 13 pour limiter de façon similaire le mouvement de la plaque flexible 26.

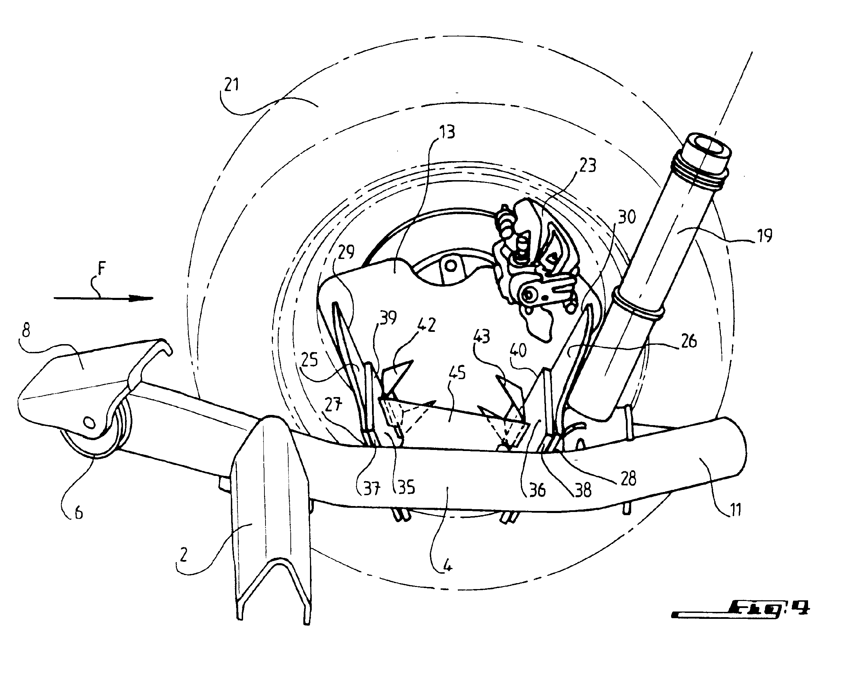

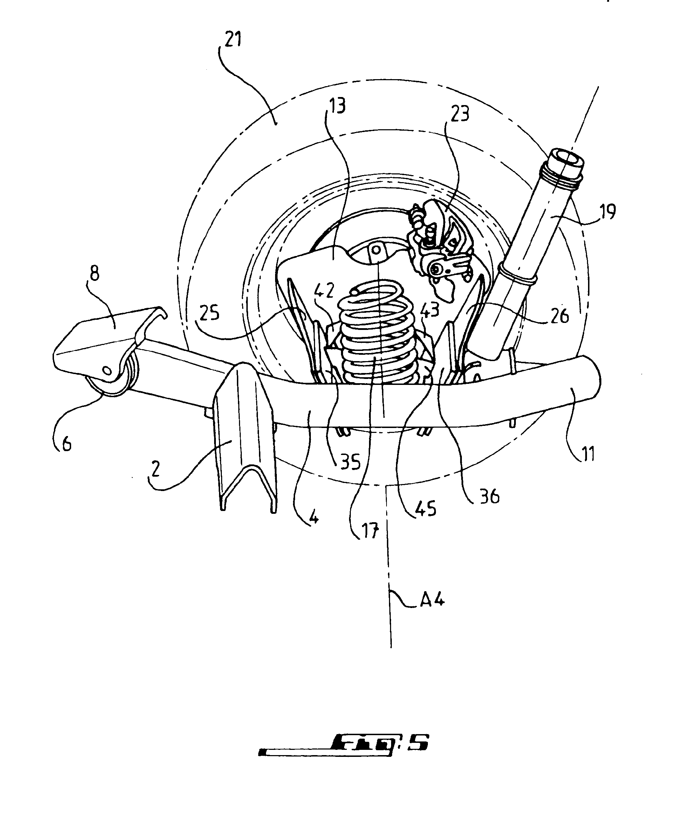

Un second mode de réalisation de l'invention est représenté sur les figures 4 et 5, dans lesquelles l'organe de butée qui limite le mouvement du support de roue comprend deux plaques fixes 35, 36 sensiblement rectangulaires et solidaires du bras oscillant, associées à deux arrêtoirs 42, 43 solidaires de la fusée 13.

Les deux plaques fixes ont chacune un premier bord fixe 37, 38 rigidement fixé au bras oscillant 4, et un second bord libre 39, 40, opposé au premier bord, qui s'étend parallèlement à la plaque constituant le support 13 sans être fixé à celle-ci.

Chaque plaque fixe 35, 36 s'étend parallèlement à une plaque flexible correspondante tout en étant légèrement espacée de cette plaque flexible correspondante le long du bras oscillant 4. Dans l'exemple des figures 4 et 5, les deux plaques fixes 35, 36 sont positionnées entre les deux plaques flexibles 25, 26 le long du bras oscillant 4.

Les deux arrêtoirs 42, 43 qui sont rigidement fixés au support 13 sont disposés chacun en vis-à-vis d'une plaque fixe correspondante dans une région proche du bord libre de cette plaque fixe correspondante.

Comme visible figure 4, les deux plaques fixes 35 et 36, qui sont perpendiculaires au bras 4, sont reliées l'une à l'autre par un renfort 45 de forme sensiblement rectangulaire, qui s'étend parallèlement au bras oscillant 4 et qui a chacune de ses extrémités rigidement fixée au centre d'une plaque fixe 35, 36 correspondante.

Ainsi les deux plaques fixes 35, 36, avec le renfort 45 constituent une sorte de caisson rigidement solidaire du bras oscillant, et qui est positionné entre les deux plaques flexibles 25 et 26. Chaque plaque flexible est légèrement espacée de la plaque fixe correspondante, et les deux arrêtoirs 42, 43 sont situés entre les deux plaques fixes 35, 36 en étant eux-mêmes légèrement espacés des deux plaques rigides correspondantes.

Lors du franchissement d'un obstacle du type défini plus haut, un effort est appliqué à mi-hauteur de la roue, depuis l'avant vers l'arrière du véhicule, ce qui est représenté par la flèche F sur la figure 4. Dans ce cas, grâce à la flexibilité des plaques 25 et 26, le support 13 se déplace longitudinalement en direction de l'extrémité arrière 11 du bras oscillant pour absorber cet effort.

Durant ce mouvement, la plaque flexible 25 se courbe de telle sorte qu'elle se rapproche de la plaque fixe 35, et la plaque flexible 26 se courbe de telle sorte qu'elle s'éloigne de la plaque fixe 36. Les plaques fixes 35, 36 restent dans la même position car elles sont solidaires seulement du bras oscillant 4.

Selon ce mouvement, l'arrêtoir 42 s'éloigne de la plaque fixe 35, et l'arrêtoir 43 se rapproche de la plaque fixe 36. Si l'effort F a une valeur trop importante, l'amplitude du mouvement est limitée par l'arrêtoir 43 qui vient en appui contre la plaque fixe 36.

De manière analogue, lorsqu'un effort est appliqué à la roue en sens inverse, c'est-à-dire en étant dirigé depuis l'arrière vers l'avant du véhicule, c'est l'arrêtoir 42 qui vient en appui contre la plaque fixe 35 pour limiter l'amplitude du déplacement du support 13 par rapport au bras oscillant 4.

Avantageusement, une entretoise non représentée, en matériau élastique tel que du caoutchouc, est intercalée dans l'espace qui sépare l'arrêtoir 42 de la plaque 35, et entre l'espace qui sépare l'arrêtoir 43 de la plaque 36. Ainsi, en cas d'effort F important, la limitation du mouvement du support 13 est alors réalisée de manière progressive par écrasement de l'entretoise en élastomère, ce qui évite notamment un choc entre l'arrêtoir et la plaque fixe correspondante et évite par là même de générer un bruit.

Avantageusement, le renfort 45 qui relie les deux plaques fixes est une partie de l'assise 15 qui reçoit une extrémité du ressort 17, de telle sorte que l'assise 15 constitue avec les plaques fixes 35, 36 un caisson dans lequel vient se positionner l'extrémité du ressort 17, comme représenté schématiquement sur la figure 5.

Comme visible sur les figures 4 et 5, les plaques fixes 35, 36 sont avantageusement réalisées avec de la tôle de forte épaisseur, l'assise 15 qui inclut le renfort 45 pouvant quant à elle être fabriquée à partir d'une tôle de plus faible épaisseur par emboutissage ou par pliage.

## Revendications

1. Train arrière (1) de véhicule automobile comprenant un bras oscillant (4) et un support de roue (13), ce train arrière (1) incluant une liaison flexible autorisant un mouvement de rotation du support de roue (13) autour d'un axe de rotation (A4) distinct de l'axe de roue (A1), cette liaison flexible comprenant au moins deux plaques flexibles (25, 26) sensiblement planes contenues dans deux plans distincts dont l'intersection coïncide avec l'axe de rotation (A4), chaque plaque flexible (25, 26) ayant un premier bord (27, 28) rigidement fixé au bras oscillant (4) et un second bord (29, 30) rigidement fixé du support de roue (13), **caractérisé en ce que** ce train arrière (1) comprend au moins un organe de butée limitant l'amplitude de flexion d'une des plaques flexibles (25, 26) afin de limiter le mouvement du support de roue (13) par rapport au bras oscillant (4).

2. Train selon la revendication 1, dans lequel les deux plaques flexibles (25, 26) sont disposées l'une par rapport à l'autre dans des plans distincts sensiblement verticaux et formant un angle entre eux, ces deux plans ayant pour intersection un axe (A4) orienté transversalement et situé au sol ou sous le sol.

3. Train selon la revendication 2, dans lequel au moins un organe de butée comprend une plaque de butée (31) sensiblement horizontale ayant un premier bord (32) rigidement fixé au bras oscillant (4), et un second bord (33) disposé en regard d'une plaque flexible (26) en étant espacé de cette plaque flexible lorsqu'elle est dans un état non fléchi.

4. Train selon la revendication 2, dans lequel au moins un organe de butée comprend une plaque de butée (31) incluant une surface sensiblement horizontale, comprenant un premier bord (32) rigidement fixé au support de roue (13), et un second bord (33) situé en regard d'une plaque flexible (26) en étant espacé de cette plaque flexible lorsqu'elle est dans un état non fléchi.

5. Train selon la revendication 1 ou 2, comprenant au moins une plaque fixe (35, 36) et un arrêtoir (42, 43), dans lequel cette plaque fixe (35, 36) longe une plaque flexible (25, 26) correspondante en étant espacée de celle-ci lorsque cette plaque flexible (25, 26) est dans un état non fléchi, cette plaque fixe ayant un premier bord fixe (37, 38) rigidement fixé au bras oscillant (4) et un second bord libre (39, 40) situé à proximité du support de roue (13), et dans lequel l'arrêtoir (42, 43) est rigidement fixé au support de roue (13) et présente une surface située en regard de la plaque fixe (35, 36) dans une région proche du second bord libre (39, 40) de la plaque fixe (35, 36), cet arrêtoir (42, 43) étant espacé de la plaque fixe (35, 36) lorsque les plaques flexibles (25, 26) sont dans un état non fléchi.

6. Train selon la revendication 5, comprenant deux plaques fixes (35, 36) réunies par un renfort (45) de manière à constituer un ensemble rigidement solidaire du bras oscillant (4), ces deux plaques fixes (35, 36) étant situées entre les deux plaques flexibles (25,26) le long du bras oscillant (4), chaque plaque fixe (35, 36) longeant une plaque flexible (25, 26) correspondante, et comprenant deux arrêtoirs (42, 43), chaque arrêtoir étant situé en regard de l'une des plaques fixes (35, 36) correspondante en étant espacé de celle-ci lorsque les plaques fixes (35, 36) sont dans un état non fléchi.

7. Train selon la revendication 6, dans lequel le renfort (45) fait partie d'une assise (15) rigidement fixée au bras oscillant (4) et servant d'appui à un ressort de suspension (17).

8. Train selon l'une des revendications précédentes, comprenant une entretoise en matériau élastique qui est interposée entre une plaque de butée (31) et une plaque flexible (25, 26) correspondante, ou entre un arrêtoir (42, 43) et une plaque fixe (35, 36) correspondante.

## Claims

1. Rear axle system (1) for a motor vehicle comprising a trailing arm (4) and a wheel support (13), this rear axle system (1) including a flexible link allowing a rotation movement of the wheel support (13) about a rotation axis (A4) that is different from the wheel axis (A1), this flexible link comprising at least two substantially flat flexible plates (25, 26) contained in two different planes, the intersection of which coincides with the rotation axis (A4), each flexible plate (25, 26) having a first edge (27, 28) rigidly fixed to the trailing arm (4) and a second edge (29, 30) rigidly fixed to the wheel support (13), **characterized in that** this rear axle system (1) comprises at least one end-stop device limiting the deflection amplitude of one of the flexible plates (25, 26) in order to limit the movement of the wheel support (13) relative to the trailing arm (4).

2. Axle system according to Claim 1, in which the two flexible plates (25, 26) are positioned relative to each other in different planes that are roughly vertical and form an angle between them, the intersection of these two planes being an axis (A4) oriented transversally and located on the ground or under the ground.

3. Axle system according to Claim 2, in which at least one end-stop device comprises a roughly horizontal end-stop plate (31) having a first edge (32) rigidly fixed to the trailing arm (4), and a second edge (33) positioned facing a flexible plate (26) while being spaced apart from this flexible plate when it is in a non-deflected state.

4. Axle system according to Claim 2, in which at least one end-stop device comprises an end-stop plate (31) including a roughly horizontal surface, comprising a first edge (32) rigidly fixed to the wheel support (13), and a second edge (33) positioned facing a flexible plate (26) while being spaced apart from this flexible plate when it is in a non-deflected state.

5. Axle system according to Claim 1 or 2, comprising at least one fixed plate (35, 36) and a retainer (42, 43), in which this fixed plate (35, 36) runs along a corresponding flexible plate (25, 26) while being spaced apart from the latter when this flexible plate (25, 26) is in a non-deflected state, this fixed plate having a first fixed edge (37, 38) rigidly fixed to the trailing arm (4) and a second free edge (39, 40) positioned close to the wheel support (13), and in which the retainer (42, 43) is rigidly fixed to the wheel support (13) and has a surface positioned facing the fixed plate (35, 36) in a region close to the second free edge (39, 40) of the fixed plate (35, 36), this retainer (42, 43) being spaced apart from the fixed plate (35, 36) when the flexible plates (25, 26) are in a non-deflected state.

6. Axle system according to Claim 5, comprising two fixed plates (35, 36) joined by a stay (45) so as to form an assembly rigidly joined to the trailing arm (4), these two fixed plates (35, 36) being positioned between the two flexible plates (25, 26) along the trailing arm (4), each fixed plate (35, 36) running along a corresponding flexible plate (25, 26), and comprising two retainers (42, 43), each retainer being positioned facing one of the corresponding fixed plates (35, 36) while being spaced apart from the latter when the fixed plates (35, 36) are in a non-deflected state.

7. Axle system according to Claim 6, in which the stay (45) is part of a seat (15) rigidly fixed to the trailing arm (4) and serving as a support for a suspension spring (17).

8. Axle system according to one of the preceding claims, comprising a spacer made of elastic material which is inserted between an end-stop plate (31) and a corresponding flexible plate (25, 26), or between a retainer (42, 43) and a corresponding fixed plate (35, 36).

## Patentansprüche

1. Kraftfahrzeug-Hinterachse (1), die einen Lenker (4) und einen Radträger (13) umfasst, wobei diese Hinterachse (1) eine flexible Verbindung aufweist, die eine Drehbewegung des Radträgers (13) um eine von der Radachse (A1) verschiedene Drehachse (A4) zulässt, wobei diese flexible Verbindung wenigstens zwei im Wesentlichen ebene flexible Platten (25, 26) aufweist, die in zwei verschiedenen Ebenen liegen, deren Schnittlinie mit der Drehachse (A4) übereinstimmt, wobei jede flexible Platte (25, 26) einen ersten Rand (27, 28), der an dem Lenker (4) starr befestigt ist, und einen zweiten Rand (29, 30), der an dem Radträger (13) starr befestigt ist, besitzt, **dadurch gekennzeichnet, dass** diese Hinterachse (1) wenigstens ein Anschlagorgan enthält, das die Amplitude der Biegung einer der flexiblen Platten (25, 26) begrenzt, um die Bewegung des Radträgers (13) in Bezug auf den Lenker (4) zu begrenzen.

2. Achse nach Anspruch 1, wobei die zwei flexiblen Platten (25, 26) relativ zueinander in im Wesentlichen vertikalen verschiedenen Ebenen angeordnet sind, die zueinander einen Winkel bilden, wobei diese zwei Ebenen als Schnittlinie eine Achse (A4) haben, die transversal orientiert ist und sich auf oder unter dem Boden befindet.

3. Achse nach Anspruch 2, wobei wenigstens ein Anschlagorgan wenigstens eine im Wesentlichen horizontale Anschlagplatte (31) aufweist, die einen an dem Lenker (4) starr befestigten ersten Rand (32) und einen gegenüber der flexiblen Platte (26) angeordneten zweiten Rand (33) besitzt und dabei von dieser flexiblen Platte beabstandet ist, wenn diese in einem nicht gebogenen Zustand ist.

4. Achse nach Anspruch 2, wobei wenigstens ein Anschlagorgan eine Anschlagplatte (31) enthält, die eine im Wesentlichen horizontale Oberfläche aufweist und einen an dem Radträger (13) starr befestigten ersten Rand (32) und einen gegenüber einer flexiblen Platte (26) angeordneten zweiten Rand (33) besitzt und dabei von dieser flexiblen Platte beabstandet ist, wenn diese in einem nicht gebogenen Zustand ist.

5. Achse nach Anspruch 1 oder 2, die wenigstens eine feste Platte (35, 36) und ein Anschlagelement (42, 43) enthält, in dem sich diese feste Platte (35, 36) an einer entsprechenden flexiblen Platte (25, 26) entlang bewegt, wobei sie von dieser beabstandet ist, wenn diese flexible Platte (25, 26) in einem nicht gebogenen Zustand ist, wobei diese feste Platte einen ersten festen Rand (37, 38), der an dem Lenker (4) starr befestigt ist, und einen zweiten freien Rand (39, 40), der sich in der Nähe des Radträgers (13) befindet, besitzt und wobei das Anschlagelement (42, 43) an dem Radträger (13) starr befestigt ist und eine Oberfläche aufweist, die sich gegenüber der festen Platte (35, 36) in einem Bereich in der Nähe des zweiten freien Randes (39, 40) der festen Platte (35, 36) befindet, wobei dieses Anschlagelement (42, 43) von der festen Platte (35, 36) beabstandet ist, wenn die flexiblen Platten (25, 26) in einem nicht gebogenen Zustand sind.

6. Achse nach Anspruch 5, die zwei feste Platten (35, 36) enthält, die durch eine Verstärkung (45) vereinigt sind, derart, dass sie eine am Lenker (4) starr befestigte Einheit bilden, wobei sich diese zwei festen Platten (35, 36) zwischen den zwei flexiblen Platten (25, 26) längs des Lenkers (4) befinden, wobei sich jede feste Platte (35, 36) an einer entsprechenden flexiblen Platte (25, 26) entlang bewegt und zwei Anschlagelemente (42, 43) aufweist, wobei sich jedes Anschlagelement gegenüber einer Entsprechenden der festen Platten (35, 36) befindet und dabei von dieser beabstandet ist, wenn die festen Platten (35, 36) in einem nicht gebogenen Zustand sind.

7. Achse nach Anspruch 6, wobei die Verstärkung (45) einen Teil eines Sitzes (15) bildet, der an dem Lenker (4) starr befestigt ist und als Abstützung für eine Aufhängungsfeder (17) dient.

8. Achse nach einem der vorhergehenden Ansprüche, die einen Abstandshalter aus elastischem Material enthält, der zwischen eine Anschlagplatte (31) und eine entsprechende flexible Platte (25, 26) oder zwischen ein Anschlagelement (42, 43) und eine entsprechende feste Platte (35, 36) eingefügt ist.
